(19) Europäisches Patentamt
European Patent Office
Office européen des brevets

(11) EP 4 246 357 A1

(12) EUROPEAN PATENT APPLICATION

(43) Date of publication:
20.09.2023 Bulletin 2023/38

(51) International Patent Classification (IPC):
*G06F 21/62* (2013.01)     *G06Q 20/06* (2012.01)

(21) Application number: 22382239.6

(22) Date of filing: 14.03.2022

(52) Cooperative Patent Classification (CPC):
G06F 21/6218; G06Q 20/065

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Universitat de Girona
17003 Girona (ES)

(72) Inventors:
• DE LA ROSA ESTEVA, José Luis
17007 Girona (ES)
• EL-FAKDI SENCIANES, Andres
17003 Girona (ES)

(74) Representative: Torner, Juncosa I Associats, SL
C / Pau Claris, 108, 1r 1a
08009 Barcelona (ES)

(54) **METHOD, SYSTEM AND COMPUTER PROGRAMS FOR VALUE PRESERVATION OF DIGITAL ASSETS IN A DISTRIBUTED COMPUTING PLATFORM**

(57)     A computer implemented method, a system and computer program for the value preservation of digital assets in a distributed computing platform are provided. The method comprises representing a digital asset to be preserved using a first-level token having a token wallet and a token manager, the representation termed CADO, which belongs to a first member. An exchange manager receives a given preservation service for the CADO from a second member and provides a quantity of second-level tokens to the second member owing to the preservation service. The token manager checks its tokens stock and the availability of fungible tokens in the exchange manager and requests an exchange of second-level tokens for fungible tokens to the exchange manager. The token manager provides an address and a temporary access to the digital asset to the second member once an exchange of fungible tokens is performed between both members.

Fig. 1

EP 4 246 357 A1

## Description

Technical Field

The present invention is directed, in general, to the field of blockchain technology. In particular, the invention relates to a method, system and computer programs for the self-value preservation of digital assets in a distributed computing platform.

The term "blockchain" as used herein includes all forms of electronic, computer-based, distributed ledgers, including transaction-chain technologies, consensus-based technologies, permissioned, un-permissioned and shared ledgers, etc.

The "value" context refers to digital objects that are accessible and readable in the short and long runs. A digital asset keeps its value if it remains accessible and readable to its users.

Background of the Invention

Blockchain digital assets such as digital pieces, games, art, etc. can be represented using digital tokens. An example of these digital tokens are non-fungible tokens (NFTs), for instance ERC 721, ERC 1155, ERC 998, etc. Tokens are typically stored in association with an electronic wallet.

Current initiatives related to digital preservation are centralized, top-to-bottom structures mainly focused on solving issues related with standardization of file formats and technical properties of digital objects needed for correct migrations and updates. Such services offer multiple storage features, and all implement the standard OAIS preservation model [1] and the Dublin Core metadata standard [2]. Following these standards, institutions like the International Federation of Library Associations and Institutions (IFLA) or the Digital Preservation Program carried out by UNESCO can be found. Additionally, open-source initiatives have proved successful into securing these standards, the best known examples being the Repository of Authentic Digital Objects (RODA) [4], the Dynamic Digital Repository (DSpace) [5], the Flexible and Extensible Digital Object Repository Architecture (FEDORA) [6], and EPrints Institutional Repository Software [7]. On the other side of the architecture design map, both commercial and open source decentralized repositories are starting to gain visibility driven by the surge of blockchain technologies and decentralized structures. Good examples of it are Filecoin, Storj, and Sia. All these architectures, both centralized and decentralized, implement the previously mentioned standards to ensure preservation and rely on the use of a set of widely accepted descriptors, organized into categories: provenance, authenticity, preservation activity, technical environment, or rights management. In turn, none of them take into account parameters related to the preservation cost or consider any kind of cost-efficient preservation factor as a part of their preservation strategy.

Digital information has gained its foothold, and, in a matter of decades, patterns of creation and use have changed rapidly. On the supply side, repository initiatives mentioned before, centralized or decentralized, offer a quite robust and continuously-under-development preservation infrastructure to manage digital information. On the demand side, most of it revolves heavily around short-term reuse, and there is an absence of well-articulated demand for the long-term run. Demand is about what people wants to consume, and such a statement guides us to the concept of value. The value of digital assets is best understood as what digital materials are good for, and that is usually understood as the ways that the materials are used-to advance knowledge, entertain or bring pleasure, help solve problems, or inform public policy. Thus, the demand for a digital object is tight to its value and the latter is often diffuse, as the criteria for selection has not been formulated. Preservation services can be supplied by one institution, or distributed across many but, in any case, an entity, centralized or a distributed, willing to know which objects have preservation priority in order to guarantee their supply would not know what to collect, for whom, or for what purpose. Therefore, the first challenge to preservation arises when demand is diffuse or weakly articulated. Addressing the matter of demand is always the first step in developing sustainable preservation strategies. In line with giving a response to the digital preservation problem based on demand and value, investment is only undertaken after reflection on business cases and an assessment of the value that the action would bring to the organization. In creating a business case, the majority of people focus primarily on cost, but there must be a counter-balancing focus on value, and there are no good digital preservation business cases to support that.

References:

[1] Giaretta, D. Introduction to OAIS Concepts and Terminology. In Advanced Digital Preservation; Springer: Berlin/Heidelberg, Germany, 2011; pp. 13-30.

[2] Weibel, S.; Kunze, J.; Lagoze, C.;Wolf, M. Dublin Core Metadata for Resource Discovery. RFC 1998, 2413, 132.

[4] Ramalho, J.; Ferreira, M.; Faria, L.; Castro, R.; Barbedo, F.; Corujo, L. RODA and CRiB a Service-Oriented Digital Repository. In Proceedings of the Fifth International Conference on Preservation of Digital Objects, London, UK, 29-30 September 2008.

[5] Smith, M.; Bass, M.; McClellan, G.; Tansley, R.; Barton, M.; Branschofsky, M.; Stuve, D.;Walker, J.H. DSpace: An Open Source Dynamic Digital Repository. D-Lib Mag. 2003, 9.

[6] Daniel, R.; Lagoze, C. Distributed active relationships in the Warwick framework. In Proceedings of the Second IEEE Metadata Workshop, Silver Spring, MD, USA, 16-17 September 1997.

[7] Beazley, M.R. Eprints Institutional Repository Software: A Review. Partnersh. Can. J. Libr. Inf. Pract. Res. 2011, 5.

Description of the Invention

The object of the present invention is to provide a new technology/solution for the preservation of digital assets.

This object is fulfilled by a method with the characteristics of claim 1, a system with the features of claim 9 and by a computer program with the features of claim 14.

To that end the present invention proposes, according to one aspect, a method for the value preservation of digital assets (e.g. digital art, music, etc.) in a distributed computing platform, said distributed computing platform comprising a plurality of registered members and an exchange computing manager, the exchange computing manager having a manager wallet for storing fungible exchangeable tokens and second-level digital tokens. The method comprises representing a digital asset to be preserved using a first-level digital token having a token wallet and a token smart contract manager, where the representation is referred as CADO, the digital asset belongs to a first member of the plurality of registered members, and where the token wallet includes a given amount of second-level digital tokens; receiving, by the exchange computing manager, a given preservation service for the CADO from a second member of the plurality of registered members; splitting, by the exchange computing manager, the received preservation service as a fungible exchangeable token and storing it into the manager wallet; providing, by the exchange computing manager, a quantity of second-level digital tokens to the second member owing to the given preservation service; checking, by the token smart contract manager, a second-level digital tokens stock of the token wallet and an availability of fungible exchangeable tokens in the exchange computing manager; requesting, by the token smart contract manager, once a result of said checking determines that the second-level digital tokens stock is equal or above a threshold and that there are available fungible exchangeable tokens, an exchange of second-level digital tokens for fungible exchangeable tokens to the exchange smart contract manager; and providing, by the token smart contract manager, once an exchange of fungible exchangeable tokens is performed between the token smart contract manager and the second member is made for the given preservation service, an address and a temporary access to the digital asset to the second member.

Present invention also proposes, according to another aspect, a system for the value preservation of digital assets in a distributed computing platform, said distributed computing platform comprising: a plurality of computing nodes, each one of the plurality of computing nodes being associated to a registered member, wherein a digital asset to be preserved is represented using a first-level digital token having a token wallet and a token smart contract manager, the representation being referred as CADO, the digital asset belonging to a first member, and the token wallet including a given amount of second-level digital tokens; and an exchange computing manager having a manager wallet configured to store fungible exchangeable tokens and second-level digital tokens.

The exchange computing manager is configured to receive a given preservation service for the CADO from a second member; split the received preservation service as a fungible exchangeable token and store it into the manager wallet; and provide a quantity of second-level digital tokens to the second member owing to the given preservation service.

The token smart contract manager is configured to check a second-level digital tokens stock of the token wallet and an availability of fungible exchangeable tokens in the exchange computing manager; request, once a result of said checking determines that the second-level digital tokens stock is equal or above a threshold and that there are available fungible exchangeable tokens, an exchange of second-level digital tokens for fungible exchangeable tokens to the exchange smart contract manager; and provide, once an exchange of fungible exchangeable tokens is performed between the token smart contract manager and the second member is made for the given preservation service, an address and a temporary access to the digital asset to the second member.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

In some embodiments, the distributed computing platform is a Distributed Blockchain Ledger. In an embodiment, the Ethereum blockchain is used. The features of the invention can be implemented via other DLTs and/or using other protocols, for example, Polkadot, EOS, Solana, Binance smart chain, Stellar, Ontra, Hedera, Tezos, Tron, Stratis, NEM, Waves, NEO, Chainlink, Corda, Algorand, Hyperledger Fabrik, etc.

In some embodiments, the token smart contract manager further updates a status of the CADO in view of information received from the second member.

In some embodiments, the first-level digital token is configured as a non-fungible token.

In some embodiments, the second-level digital tokens includes non-fungible tokens and fungible tokens.

In some embodiments, in the providing step the quantity of second-level digital tokens is provided according to a constant product equation that assures that the second-level tokens and the fungible exchangeable tokens in the manager wallet remain at a fixed relative value.

The given preservation service can include one or more of: an existent metadata update, an include new metadata, a format migration, an authorship certificate, an ownership certificate, an existent ownership update, an engagement properties update, among others.

In some embodiments, the digital asset is represented on-demand of the first member.

Description of the Drawings

The previous and other advantages and features will be more fully understood from the following detailed description of embodiments, with reference to the attached figures, which must be considered in an illustrative and non-limiting manner, in which:

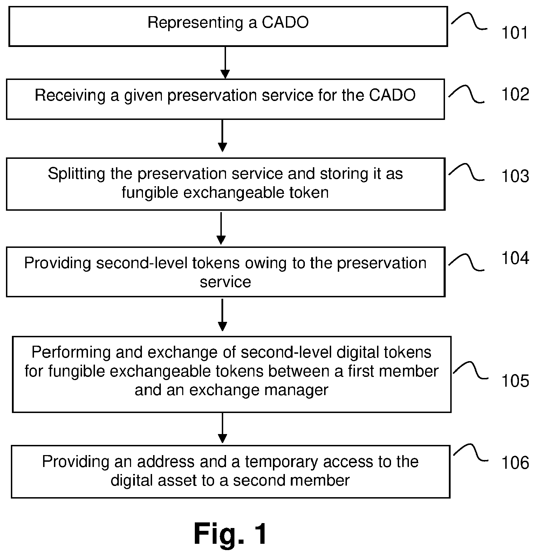

Fig. 1 is a flow diagram of an example embodiment of a computer-implemented method for value preservation of digital assets in a distributed computing platform.

Detailed Description of Preferred Embodiments

Present invention provides a solution for the self-value preservation of digital assets inside a distributed computing platform.

Following the different elements of the distributed computing platform are detailed.

- Members of the distributed platform: The distributed computed platform, for instance a Distributed Ledger, is constructed by a distributed network of nodes (computers) and registered members. Inside the platform there are two types of members, named member1 and member2, where the member1 is the digital asset owner and the member2 is the preservation services offeror.

- CADO: A CADO represents a tokenized digital asset to be preserved, and it is registered inside the distributed computing platform as a first-level digital token, particularly as an NFT. The first-level digital token includes an electronic wallet (referred as token wallet) and a smart contract manager (referred as token smart contract manager). The token wallet can store second-level digital tokens. The token wallet in some embodiments is a multiwallet where both NFTs and FTs can be stored. In other embodiments, the token wallet stores a single type of token, thus being uniwallet.

- Token Smart Contract Manager: As said, every registered digital asset as a NFT has its associated smart contract manager. This contract manages value preservation actions to be taken inside the distributed computing platform according to the token disposal in the token wallet and the current value of the digital asset (accessibility and readability).

- Exchange Computing Manager (AEM): The AEM is programmed inside the distributed computing platform as a smart contract. It works as a decentralized exchange and as a smart contract, and has an associated wallet (referred as manager wallet) for storing fungible exchangeable tokens (i.e. a token that represents a service to preserve a certain amount of digital information (Mb, Gb, Tb...)) and second-level digital tokens. The AEM allows CADOs in need of preservation to acquire fungible exchangeable tokens in exchange for second-level digital tokens.

- Fungible Exchangeable Tokens (sometimes referred as Qantas): These are a special type of digital tokens to better appraise the cost of a given preservation service, as it will be referred to the amount of information one can preserve, not as an individual service or for certain number of files but to the total information size one is able to preserve with a Qanta.

With reference now to Fig. 1, therein an embodiment of the proposed method is illustrated. According to this embodiment, member1 owns a digital asset and decides to register the digital asset inside the distributed computed platform. The digital asset is registered as a NFT with its associated token wallet and token smart contract manager; a CADO has been represented/created (step 101). Member1 puts an initial quantity of second-level tokens inside the token wallet to assure its future preservation. Then, member2 registers inside the distributed computed platform as a preservation service offeror. Once inside the distributed computed platform, member2 offers a certain amount of a given preservation service (an existent metadata update, an include new metadata, a format migration, an authorship certificate, an ownership certificate, an existent ownership update, an engagement properties update, among others) to the AEM (step 102). The AEM splits the received preservation service as a fungible exchangeable token and puts it into the manager wallet (step 103). At the same time, the AEM extracts the equivalent quantity of second-level tokens from its wallet and puts these second-level tokens into the wallet of member2 (step 104). In some embodiments, this is done according to a constant product equation which assures that the second-level tokens and the fungible exchangeable tokens in the manager wallet remain at a fixed relative value. In some other more particular embodiments, this is done according to the following stability equation:

$$m * n = k$$

where m is the total number of fungible exchangeable token stored in the manager wallet, $n$ is the total number of second-level digital tokens stored in the manager wallet and k is a predefined constant value which determines the ratio between the fungible exchangeable token m and the second-level digital token $n$. When a number y of fungible exchangeable tokens is stored in the manager wallet, the exchange computing manager computes the quantity of tokens $x$ to be provided in exchange according to:

$$(m + y) * (n - x) = k$$

where $y$ is the number of fungible exchangeable token described before provided by the member2 to the manager wallet and x is the quantity of tokens provided to the member2, equivalent to:

$$x = n - \frac{k}{m+y}.$$

Following with the explanation of Fig. 1, the token smart contract manager, for instance upon having detecting obsolescence in metadata parameters and possible value loss risk, can check its second-level token stock inside the token wallet and also the current fungible exchangeable tokens availability inside the AEM. If there are enough second-level digital tokens (i.e. the amount is equal or higher than a threshold) and fungible exchangeable tokens available, the token smart contract manager can request (step 105) an exchange of second-level digital tokens for fungible exchangeable tokens to the AEM. The AEM can accept the exchange, so it will withdraw the required fungible exchangeable tokens from the manager wallet and put them inside the token wallet. The required second-level tokens will be moved, either at the same time or after, from the token wallet to the manager wallet.

At this point, the token wallet has fungible exchangeable tokens/Qantas in it. The token smart contract manager can therefore contact member2 and request an exchange of fungible exchangeable tokens for the desired preservation service. Member2 accepts the fungible exchangeable tokens and so these tokens are withdrawn from token wallet and the token smart contract manager provides to the member2 the address and temporary access to the digital asset to be preserved so the preservation service can be performed (step 106).

In some embodiments, the second member can provide updated information about new CADO status and metadata profile. This procedure is performed without any requirement from the digital asset owner member1. Thus, the digital asset is preserved, and information related to the new characteristics of the updated digital asset are added into the token wallet.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing.

Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A computer implemented method for the value preservation of digital assets in a distributed computing platform, said distributed computing platform comprising a plurality of registered members and an exchange computing manager, the exchange computing manager having a manager wallet for storing fungible exchangeable tokens and second-level digital tokens, the method comprising:

   representing a digital asset to be preserved using a first-level digital token having a token wallet and a token smart contract manager, the representation being referred as CADO, the digital asset belonging to a first member of the plurality of registered members, and the token wallet including a given amount of second-level digital tokens;
   receiving, by the exchange computing manager, a given preservation service for the CADO from a second member of the plurality of registered members;
   splitting, by the exchange computing manager, the received preservation service as a fungible exchangeable token and storing it into the manager wallet;
   providing, by the exchange computing manager, a quantity of second-level digital tokens to the second member owing to the given preservation service;
   checking, by the token smart contract manager, a second-level digital tokens stock of the token wallet and an availability of fungible exchangeable tokens in the exchange computing manager;
   requesting, by the token smart contract manager, once a result of said checking determines that the second-level digital tokens stock is equal or above a threshold and that there are available fungible exchangeable tokens, an exchange of second-level digital tokens for fungible exchangeable tokens to the exchange smart contract manager; and
   providing, by the token smart contract manager, once an exchange of fungible exchangeable tokens is performed between the token smart contract manager and the second member is made for the given preservation service, an address and a temporary access to the digital asset to the second member.

2. The method of claim 1, wherein the token smart contract manager further updates a status of the CADO in view of information received from the second member.

3. The method of claim 1 or 2, wherein in the providing step the quantity of second-level digital tokens is provided according to a constant product equation that assures that the second-level tokens and the fungible exchangeable tokens in the manager wallet remain at a fixed relative value.

4. The method of any one of the previous claims, wherein the first-level digital token is configured as a non-fungible token.

5. The method of any one of the previous claims, wherein the second-level digital tokens includes non-fungible tokens and fungible tokens.

6. The method of any one of the previous claims, wherein the given preservation service includes one or more of: an existent metadata update, an include new metadata, a format migration, an authorship certificate, an ownership certificate, an existent ownership update, an engagement properties update.

7. The method of any one of the previous claims, wherein the digital asset is represented on-demand of the first member.

8. The method of any one of the previous claims, wherein the distributed computing platform is a Distributed Ledger.

9. The method of claim 8, wherein the distributed ledger comprises one of: Ethereum, Polkadot, EOS, Solana, Binance smart chain, Stellar, Ontra, Hedera, Tezos, Tron, Stratis, NEM, Waves, NEO, Chainlink, Corda, Algorand, or Hyperledger Fabrik.

10. A system for the value preservation of digital assets in a distributed computing platform, said distributed computing platform comprising:

   a plurality of computing nodes, each one of the plurality of computing nodes being associated to a registered member, wherein a digital asset to be preserved is represented using a first-level digital token having a token wallet and a token smart contract manager, the representation being referred as CADO, the digital asset belonging to a first member, and the token wallet including a given amount of second-level digital tokens; and
   an exchange computing manager having a manager wallet configured to store fungible exchangeable tokens and second-level digital tokens, the exchange computing manager being configured to:

      receive a given preservation service for the CADO from a second member;
      split the received preservation service as a fungible exchangeable token and store it into the manager wallet;
      provide a quantity of second-level digital tokens to the second member owing to the given preservation service;

   the token smart contract manager being configured to:

      check a second-level digital tokens stock of the token wallet and an availability of fungible exchangeable tokens in the exchange computing manager;
      request, once a result of said checking determines that the second-level digital tokens stock is equal or above a threshold and that there are available fungible exchangeable tokens, an exchange of second-level digital tokens for fungible exchangeable tokens to the exchange smart contract manager; and
      provide, once an exchange of fungible exchangeable tokens is performed between the token smart contract manager and the second member is made for the given preservation service, an address and a temporary access to the digital asset to the second member.

11. The system of claim 10, wherein the distributed computing platform is a Distributed Ledger.

12. The system of claim 10 or 11, wherein the distributed ledger comprises one of: Ethereum, Polkadot, EOS, Solana, Binance smart chain, Stellar, Ontra, Hedera, Tezos, Tron, Stratis, NEM, Waves, NEO, Chainlink, Corda, Algorand, or Hyperledger Fabrik.

13. The system of any one of the claims 10-12, wherein the first-level digital token is configured as a non-fungible token.

14. The system of any one of the claims 10-13, wherein the second-level digital tokens includes non-fungible tokens and fungible tokens.

15. A non-transitory computer readable medium comprising a computer program adapted to implement the methods of claims 1 to 9.

Representing a CADO — 101

Receiving a given preservation service for the CADO — 102

Splitting the preservation service and storing it as fungible exchangeable token — 103

Providing second-level tokens owing to the preservation service — 104

Performing and exchange of second-level digital tokens for fungible exchangeable tokens between a first member and an exchange manager — 105

Providing an address and a temporary access to the digital asset to a second member — 106

## Fig. 1

Europäisches
Patentamt

European
Patent Office

Office européen
des brevets

## EUROPEAN SEARCH REPORT

Application Number

EP 22 38 2239

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/342539 A1 (DONEY GEORGE DANIEL [US]) 29 October 2020 (2020-10-29) * column 3, line 45 – column 34, line 22 * ----- | 1-15 | INV. G06F21/62 G06Q20/06 |
| A | US 10 540 654 B1 (JAMES DANIEL WILLIAM HALLEY [US] ET AL) 21 January 2020 (2020-01-21) * paragraph [0004] – paragraph [0011] * ----- | 1-15 | |

|  |
|---|
| TECHNICAL FIELDS SEARCHED (IPC) |
| G06F G07G G06Q |

The present search report has been drawn up for all claims

| Place of search | Date of completion of the search | Examiner |
|---|---|---|
| The Hague | 10 September 2022 | Pinto, Raúl |

EPO FORM 1503 03.82 (P04C01)

## ANNEX TO THE EUROPEAN SEARCH REPORT
## ON EUROPEAN PATENT APPLICATION NO.

EP 22 38 2239

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2022

| Patent document cited in search report | Publication date | Patent family member(s) | Publication date |
|---|---|---|---|
| US 2020342539 A1 | 29-10-2020 | NONE | |
| US 10540654 B1 | 21-01-2020 | NONE | |

EPO FORM P0459

For more details about this annex : see Official Journal of the European Patent Office, No. 12/82

**REFERENCES CITED IN THE DESCRIPTION**

**Non-patent literature cited in the description**

- Introduction to OAIS Concepts and Terminology. **GIARETTA, D.** Advanced Digital Preservation. Springer, 2011, 13-30
- **WEIBEL, S. ; KUNZE, J. ; LAGOZE, C. ; WOLF, M.** Dublin Core Metadata for Resource Discovery. *RFC,* 1998, vol. 132, 2413
- **RAMALHO, J. ; FERREIRA, M. ; FARIA, L. ; CASTRO, R. ; BARBEDO, F. ; CORUJO, L.** RODA and CRiB a Service-Oriented Digital Repository. *Proceedings of the Fifth International Conference on Preservation of Digital Objects, London, UK,* 29 September 2008
- **SMITH, M. ; BASS, M. ; MCCLELLAN, G. ; TANSLEY, R. ; BARTON, M. ; BRANSCHOFSKY, M. ; STUVE, D. ; WALKER, J.H.** DSpace: An Open Source Dynamic Digital Repository. *D-Lib Mag.,* 2003, vol. 9
- **DANIEL, R. ; LAGOZE, C.** Distributed active relationships in theWarwick framework. *Proceedings of the Second IEEE Metadata Workshop, Silver Spring, MD, USA,* 16 September 1997
- **BEAZLEY, M.R.** Eprints Institutional Repository Software: A Review. *Partnersh. Can. J. Libr. Inf. Pract. Res.,* 2011, vol. 5